# EUROPEAN PATENT APPLICATION

(11) **EP 4 601 085 A1**
(43) Date of publication of application: **13.08.2025**
(21) Application number: 23914989.1
(22) Date of filing: 21.12.2023
(51) Int. Cl.: H01M 50/105, H01M 50/178

(54) **POUCH-TYPE SECONDARY BATTERY**

(30) Priority: 02.01.2023 KR 20230000188
(71) Applicant: LG Energy Solution, Ltd., Seoul 07335 (KR)
(72) Inventor: BAEK, Doo Hyun, Daejeon 34122 (KR); KANG, In Woo, Daejeon 34122 (KR); HONG, Eui Jin, Daejeon 34122 (KR); LEE, Hyun Ju, Daejeon 34122 (KR); CHO, Seung Su, Daejeon 34122 (KR)
(74) Representative: Plasseraud IP
(86) International application number: PCT/KR2023/021350
(87) International publication number: WO 2024/147529

(57) **Abstract**

This invention relates to a pouch-type secondary battery including: a first pouch having a first cup portion recessed in a predetermined first direction to form a first inner space, and a first edge portion extending from the first cup portion in a predetermined horizontal direction perpendicular to the first direction and surrounding at least a portion of the first cup portion; and a second pouch disposed to face the first pouch, wherein the second pouch has a second cup portion recessed in a direction opposite to the first direction to form a second inner space for accommodating an electrode assembly together with the first inner space, and a second edge portion extending from the second cup portion in the horizontal direction to surround at least a portion of the second cup portion and coupled to the first edge portion; wherein the second inner space may include: an overlapping space that overlaps the first inner space based on a case of projection in the first direction, and an additional space that extends from the overlapping space in the horizontal direction and does not overlap the first inner space.

## Description

### [TECHNICAL FIELD]

### CROSS-REFERENCE TO RELATED APPLICATIONS

This application claims the benefit of priority to Korean Patent Application No. 10-2023-0000188 filed on January 2, 2023, the disclosure of which is incorporated herein by reference in its entirety.

### TECHNICAL FIELD

The present invention relates to a pouch-type secondary battery.

### [BACKGROUND ART]

In general, a secondary battery refers to a battery capable of charging and discharging, unlike a primary battery that cannot be charged, and is widely used in electronic devices such as mobile phones, laptops, and camcorders, or electric vehicles. In particular, since a lithium secondary battery has a larger capacity than a nickelcadmium battery or a nickel-hydrogen battery, and has a high energy density, its utilization is rapidly increasing.

Depending on the shape of a battery case, the secondary battery may be classified into a cylindrical or prismatic battery in which an electrode assembly is accommodated in a cylindrical or prismatic metal can, and a pouch-type battery in which an electrode assembly is accommodated in a pouch-type case of a laminate sheet.

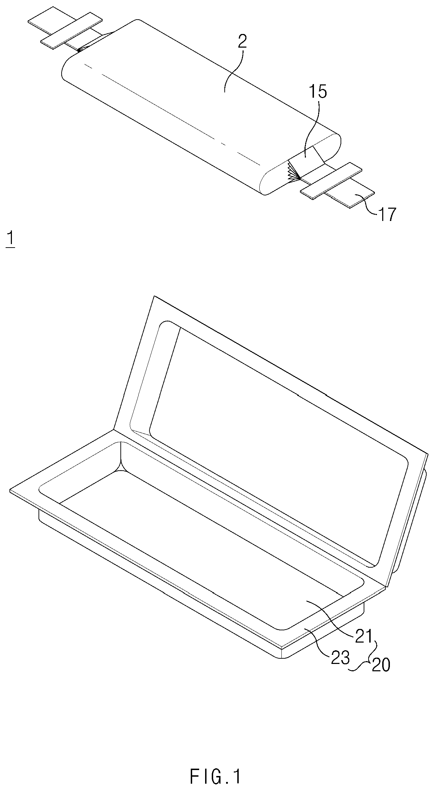

FIG. 1 is a diagram illustrating an example of a pouch-type secondary battery. The pouch-type secondary battery (pouch-type cell) 1 includes: an electrode assembly 2 formed by alternately stacking electrodes and separators, and a pouch-type exterior material 20 accommodating the electrode assembly 2 therein. Electrode tabs 15 may be connected to the electrodes of the electrode assembly 2, respectively. The electrode tabs 15 may be welded to each other in predetermined areas and then connected to electrode leads 17 by welding. The exterior material 20 includes an accommodation part 21 for accommodating the electrode assembly 2. The accommodation part 21 of the exterior material 20 may be formed of one or two recessed portions. In FIG. 1, an accommodation part 21 formed of two recessed portions is illustrated. A sealing part (terrace) 23 is formed around the circumference of the accommodation part 21 by sealing.

Meanwhile, gas may be generated inside the pouch-type secondary battery in situations such as high temperature. The generation of gas may increase the internal pressure of the secondary battery. When the internal pressure increases, a delay in venting may be required to ensure the safety of the secondary battery. To delay the venting, it may be considered to increase a space for accommodating the gas inside the secondary battery. However, this may be undesirable because it may increase the size of the secondary battery, thereby reducing a volumetric energy density of the secondary battery.

### [DISCLOSURE]

### [TECHNICAL PROBLEM]

An object of the present invention is to provide a pouch-type secondary battery capable of securing an additional space for accommodating gas inside the secondary battery to delay venting due to gas generation in the secondary battery in use.

Further, another object of the present invention is to provide a pouch-type secondary battery capable of securing an additional space inside the secondary battery without lowering a volumetric energy density.

### [TECHNICAL SOLUTION]

In one embodiment, a pouch-type secondary battery may include: a first pouch having a first cup portion recessed in a predetermined first direction to form a first inner space, and a first edge portion extending from the first cup portion in a predetermined horizontal direction perpendicular to the first direction and surrounding at least a portion of the first cup portion; and a second pouch disposed to face the first pouch, wherein the second pouch has a second cup portion recessed in a direction opposite to the first direction to form a second inner space for accommodating an electrode assembly together with the first inner space, and a second edge portion extending from the second cup portion in the horizontal direction to surround at least a portion of the second cup portion and coupled to the first edge portion; wherein the second inner space may include: an overlapping space that overlaps the first inner space based on a case of projection in the first direction, and an additional space that extends from the overlapping space in the horizontal direction and does not overlap the first inner space.

In another embodiment, the additional space of the second inner space may be a space in which the electrode assembly is not disposed.

In yet another embodiment, the additional space of the second inner space may be provided to accommodate gas generated inside the first and second pouches to delay a start time of discharging the gas to the outside of the first and second pouches.

In still another embodiment, a length of the first edge portion in the horizontal direction may be determined based on the size of the first cup portion.

In still another embodiment, the first edge portion may include: a non-overlapping portion positioned to correspond to the additional space of the second inner space and not overlapping the second edge portion based on a case of projection in a direction opposite to the first direction; and an overlapping portion extending from the non-overlapping portion in the horizontal direction and overlapping the second edge portion.

In still another embodiment, the overlapping portion of the first edge portion and the second edge portion may be bent toward the first cup portion.

In still another embodiment, the overlapping portion of the first edge portion and the second edge portion may be bent toward the first cup portion so as not to be exposed to the outside of the non-overlapping portion in the horizontal direction based on a case of projection in a direction opposite to the first direction.

In still another embodiment, the length of the non-overlapping portion along the horizontal direction may be a length allowing the overlapping portion of the first edge portion or the second edge portion to contact the first cup portion by bending.

In still another embodiment, the overlapping portion of the first edge portion and the second edge portion may be first folded toward the first cup portion along a first folding line spaced apart from an outer end of the first edge portion in the horizontal direction toward the first cup portion by a first distance and provided in parallel to the outer end of the first edge portion, and may be secondly folded toward the first cup portion along a second folding line spaced apart from the first folding line toward the first cup portion by a second distance and provided in parallel to the first folding line.

In still another embodiment, the pouch-type secondary battery may further include a fixing tape attached to an outer surface of the first cup portion and the second edge portion so as to pull the second edge portion toward the first cup portion so that the overlapping portion of the first edge portion and the second edge portion are not unfolded in a direction away from the first cup portion.

In still another embodiment, a pouch-type secondary battery may include: a first pouch having a first cup portion recessed in a predetermined first direction to form a first inner space, and a first edge portion extending from the first cup portion and surrounding at least a portion of the first cup portion; and a second pouch disposed to face the first pouch, wherein the second pouch has a second cup portion recessed in a direction opposite to the first direction to form a second inner space for accommodating an electrode assembly together with the first inner space, and a second edge portion extending from the second cup portion to surround at least a portion of the second cup portion and coupled to the first edge portion, wherein the second inner space is formed in a shape asymmetrical to the first inner space, and include an additional space which is provided due to the asymmetric shape and in which the electrode assembly is not disposed to accommodate gas generated inside the first and second pouches.

### [ADVANTAGEOUS EFFECTS]

According to the present invention, an additional space for accommodating gas can be provided in the second inner space due to the second inner space formed in a shape asymmetrical to the first inner space, thereby delaying a time when venting starts.

Further, according to the present invention, since a portion of the space occupied by the secondary battery due to an edge of the conventional secondary battery is utilized, an additional space can be provided without lowering the volumetric energy density.

### [DESCRIPTION OF DRAWINGS]

FIG. 1 is a diagram illustrating an example of a pouch-type secondary battery.
FIG. 2 is a perspective view illustrating a pouch-type secondary battery according to Embodiment 1 of the present invention.
FIG. 3 is a cross-sectional view taken along line A-A of FIG. 2.
FIG. 4 is a diagram for explaining a comparison between a conventional secondary battery and a secondary battery of Embodiment 1.
FIG. 5 is a perspective view illustrating a pouch-type secondary battery according to Embodiment 2 of the present invention.
FIG. 6 is a perspective view illustrating the secondary battery of FIG. 5 before the edge portion is bent.
FIG. 7 is a cross-sectional view taken along line C-C of FIG. 6.
FIG. 8 is a cross-sectional view taken along line B-B of FIG. 5.
FIG. 9 is a diagram for explaining a comparison between a conventional secondary battery and a secondary battery of Embodiment 2.
FIG. 10 is a perspective view illustrating a modified example of the secondary battery of FIG. 5.

### [BEST MODES OF THE INVENTION]

Hereinafter, with reference to the accompanying drawings, preferred embodiments of the present invention will be described in detail so as to be easily implemented by one of ordinary skill in the art to which the present invention pertains. However, the present invention may be embodied in a variety of different forms and is not limited or restricted by the embodiments described below.

In order to clearly explain the present invention, detailed descriptions of parts unrelated to the description or related known technologies that may unnecessarily obscure the gist of the present invention have been omitted. In the present specification, when reference numerals are added to components of each drawing, identical or similar reference numerals are used for identical or similar components throughout the specification.

In addition, the terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

### Embodiment 1

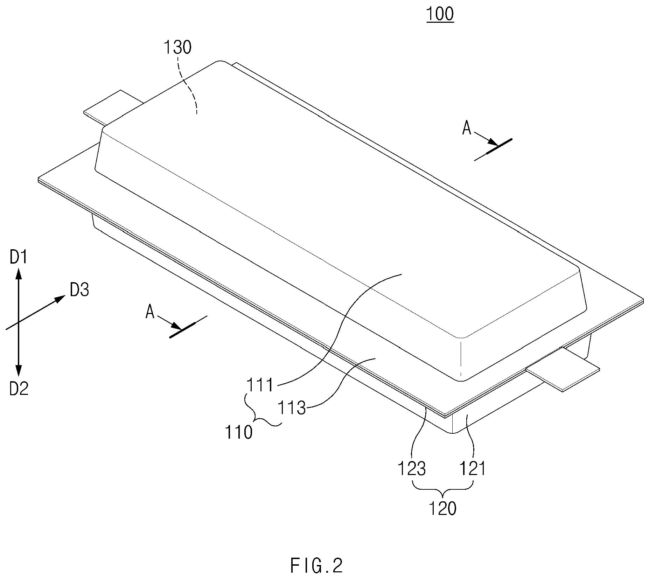

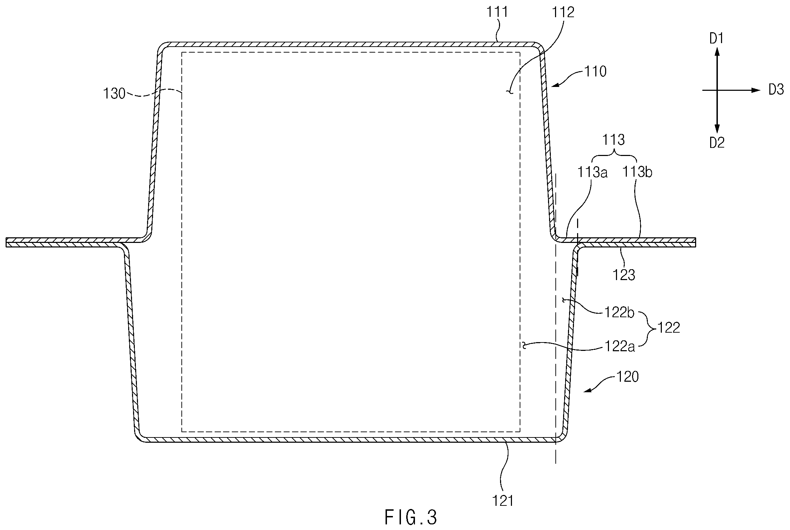

FIG. 2 is a perspective view illustrating a pouch-type secondary battery 100 according to Embodiment 1 of the present invention, and FIG. 3 is a cross-sectional view taken along line A-A of FIG. 2. As shown in FIGS. 2 and 3, a pouch-type secondary battery 100 according to this embodiment may include a first pouch 110 and a second pouch 120. For reference, the contents of Embodiment 1 can be equally applied to an embodiment to be described later, as long as they do not conflict with each other.

The pouch-type secondary battery 100 may include an electrode assembly 130 (see an electrode assembly 2 in FIG. 1) accommodated in the first and second pouches 110 and 120. The electrode assembly 130 may be formed by alternately stacking electrodes and separators. The electrode may include a positive electrode and a negative electrode. The electrode assembly 130 may include an electrode tab (see FIG. 1) connected to the electrode. The electrode tab may be provided separately, or may be provided as a part of a current collector constituting the electrode. The electrode tabs may be welded to each other in a predetermined area and then electrically connected to the electrode lead (see FIG. 1).

The pouch-type secondary battery 100 may include a first pouch 110. As shown in FIG. 3, the first pouch 110 may include a first cup portion 111 that is recessed in a predetermined first direction D1 (e.g., vertically upward) to form a first inner space 112. The first pouch 110 may include a first edge portion 113 extending from the first cup portion 111 to surround at least a portion of the first cup portion 111. The first edge portion 113 may extend in a predetermined horizontal direction D3 (an opposite direction to D3 may also be viewed as a horizontal direction) perpendicular to the first direction D1. This may be the same for a second edge portion 123, which will be described later.

The pouch-type secondary battery 100 may include a second pouch 120. The second pouch 120 may be disposed to face the first pouch 110, and may include a second cup portion 121 that is recessed in a direction D2 opposite to the first direction D1 (e.g., vertically downward) to form a second inner space 122. The first and second inner spaces 112 and 122 may together form a space for accommodating the electrode assembly 130. The second pouch 120 may include a second edge portion 123 extending from the second cup portion 121 to surround at least a portion of the second cup portion 121.

As shown in FIGS. 2 and 3, the first and second pouches 110 and 120 may be separately prepared and then coupled to each other while disposed to face each other. In this case, as shown in FIG. 2, the first and second edge portions 113 and 123 may entirely surround the first and second pouches 110 and 120, respectively. The first and second edge portions 113 and 123 may be coupled to each other to be sealed by thermal fusion or the like to form a sealing portion.

As shown in FIG. 1, the first and second pouches may be prepared as one and then folded to be coupled to each other while facing each other. In this case, the first and second edge portions may partially surround the first and second pouches 110 and 120 except for the folded portion, respectively. Even in this case, the first and second edge portions may be coupled to each other to be sealed by thermal fusion or the like to form a sealing portion.

The first and second pouches 110 and 120 may be prepared from a laminate sheet including a metal layer such as aluminum, a first resin layer disposed on the inner surface of the metal layer, and a second resin layer disposed on the outer surface of the metal layer. The first resin layer may be a layer formed of polypropylene (PP). The first resin layer requires high insulation and corrosion resistance, and may be formed of another resin that satisfies these requirements. The second resin layer may be a layer formed of polyethylene terephthalate (PET). The second resin layer needs to electrically insulate the secondary battery while protecting the secondary battery, and may be formed of another resin satisfying these requirements.

Meanwhile, as illustrated in FIG. 3, the second inner space 122 of the second pouch 120 may be formed in a shape asymmetric with the first inner space 112 of the first pouch 110. For example, the second inner space 122 may include an overlapping space 122a overlapping the first inner space 112 based on a case of projection in the first direction D1, and an additional space 122b (which may be formed at both left and right ends based on FIG. 3) extending from the overlapping space 122a in the horizontal direction D3 and not overlapping the first inner space 112. The second inner space 122 may be formed in a shape asymmetric with the first inner space 112 due to the additional space 122b.

In the case of the secondary battery according to the present embodiment, the first edge portion 113 may include a non-overlapping portion 113a and an overlapping portion 113b due to the additional space 122b. The non-overlapping portion 113a may be a portion that does not overlap the second edge portion 123 by being positioned to correspond to the additional space 122b of the second inner space 122 based on a case of projection in a direction D2 opposite to the first direction D1. The overlapping portion 113b may be a portion that extends from the non-overlapping portion 113a in the horizontal direction D3 and overlaps the second edge portion 123.

The secondary battery of this embodiment can delay the start time of venting due to the additional space 122b. This will be described in detail below. Gas may be generated inside the first and second pouches 110 and 120. For example, gas may be generated when the secondary battery is stored at high temperatures. The generation of gas may increase the internal pressure of the secondary battery. When the internal pressure increases, a delay in venting (discharging the gas inside the secondary battery to the outside of the secondary battery) may be required to ensure the safety of the secondary battery. In the secondary battery of this embodiment, since the second inner space 122 is formed in a shape asymmetrical with the first inner space 112, an additional space 122b can be provided in the second inner space 122, and gas can be accommodated in the additional space 122b, thereby delaying a time when venting starts, compared to a conventional secondary battery in which the additional space 122b is not provided. This can improve the reliability of the secondary battery during high temperature storage.

Since the additional space 122b of the second inner space 122 is a space that accommodates gas for a delay in venting, the electrode assembly 130 may not be disposed therein. In order to accommodate an electrode assembly having an asymmetric shape, it may be considered to form the first and second inner spaces 112 and 122 in a shape asymmetrical to each other. For example, when the remaining lower portion of the electrode assembly 130 is formed larger than the upper portion, it may be considered to form the second inner space larger than the first inner space to accommodate this. However, in this case, since the lower portion of the electrode assembly is entirely disposed in the second inner space, a spare space for accommodating gas may not be provided in the second inner space.

As described above, the additional space 122b of the second inner space 122 may be provided to accommodate gas generated inside the first and second pouches 110 and 120 to delay a start time of discharging the gas to the outside of the first and second pouches 110 and 120, that is, a start time of venting. However, it can be said that in the secondary battery that has an asymmetric inner space for accommodating the asymmetric electrode assembly discussed above, there is no spare space provided for accommodating the gas.

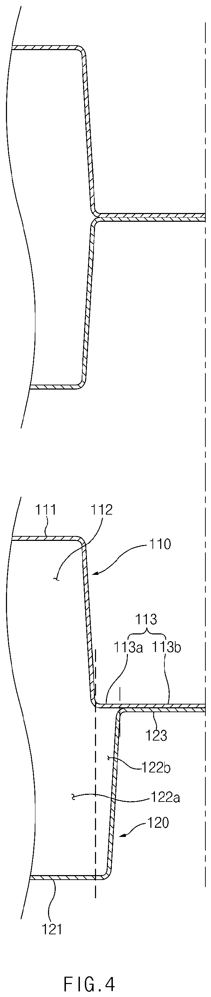

The secondary battery according to the present embodiment can provide the above-described additional space 122b without a decrease in volumetric energy density. This will be described in detail with reference to FIG. 4. FIG. 4 is a diagram for explaining a comparison between a conventional secondary battery and a secondary battery of Embodiment 1.

In order to provide a spare space for accommodating gas, it may be considered to increase the size of the pouch while maintaining the size of the electrode assembly as it is. However, this has a problem of lowering the volumetric energy density of the secondary battery by increasing the size of the secondary battery. However, in the secondary battery of Embodiment 1 (lower drawing of FIG. 4), compared to the conventional secondary battery (upper drawing of FIG. 4), the additional space 122b is provided by utilizing a part of the space occupied by the secondary battery (i.e., the space in which other secondary batteries are not arranged) due to the edge portion of the conventional secondary battery, whereby the additional space 122b can be provided while maintaining the conventional volumetric energy density as it is, that is, without a decrease in the volumetric energy density.

For example, in the case of the secondary battery of the present embodiment, the length of the first edge portion 113 in the horizontal direction D3 may be determined regardless of the additional space 122b provided in the second pouch 120. If the length of the first edge portion may be set to be a predetermined L in a case where the first and second inner spaces are provided symmetrically with each other, the length of the first edge portion 113 may also be maintained at the same L in a case where the first and second inner spaces 112 and 122 are provided asymmetrically with each other, as shown in FIG. 4. Accordingly, the secondary battery of the present embodiment can maintain the volumetric energy density of the conventional secondary battery in which no additional space 122b is provided. The length of the first edge portion 113 in the horizontal direction D3 can be determined, for example, based on the size of the first cup portion 111 (e.g., the volume of the first inner space), and even if the additional space 122b is provided in the second inner space 122 of the second cup portion 121, the length may be maintained as it is.

### Embodiment 2

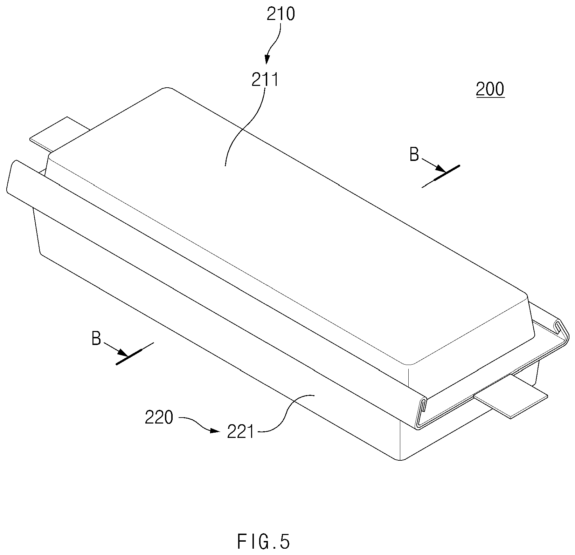

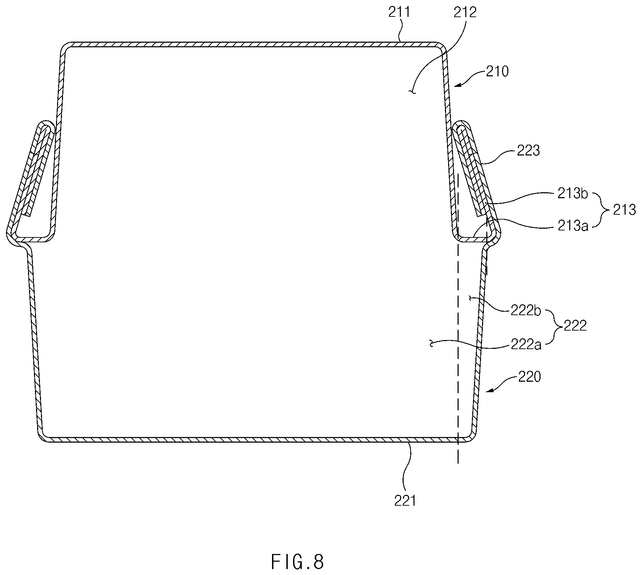

FIG. 5 is a perspective view illustrating a pouch-type secondary battery 200 according to Embodiment 2 of the present invention. As shown in FIG. 5, in the secondary battery 200 according to the present embodiment, compared to the secondary battery 100 of Embodiment 1, there is a difference in that the overlapping portion 213b of the first edge portion 213 and the second edge portion 223 are bent toward the second cup portion 221 (see FIG. 8). For reference, the contents of Embodiment 2 can be equally applied to the above-described embodiment, as long as they do not conflict with each other.

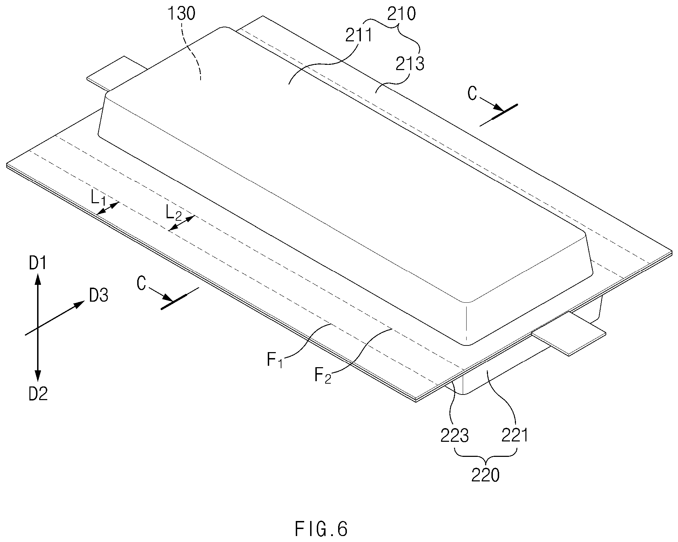

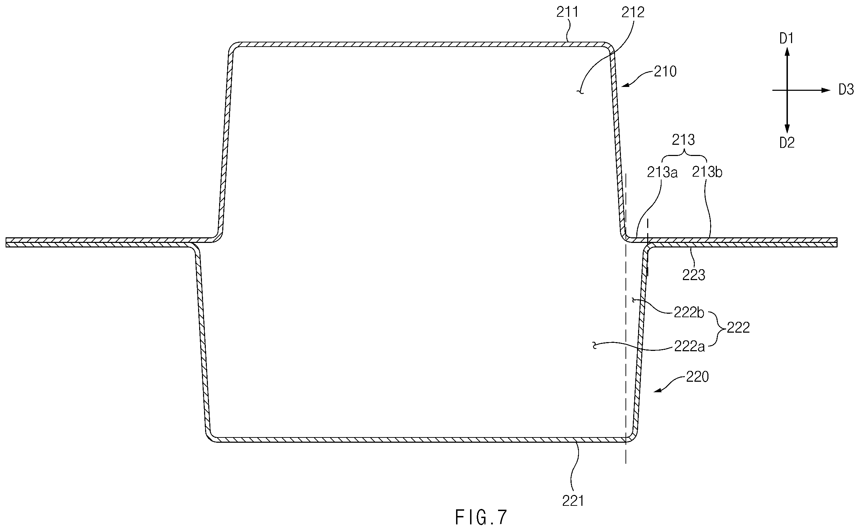

First, a bending process will be described with reference to FIGS. 6 and 7. FIG. 6 is a perspective view illustrating the secondary battery of FIG. 5 before the edge portion is bent, and FIG. 7 is a cross-sectional view taken along line C-C of FIG. 6. When a line spaced apart from the outer end of the first edge portion 213 in the horizontal direction (an opposite direction to D3 in FIG. 6) toward the first cup portion 211 by a first distance L1 and provided in parallel to the outer end of the first edge portion 213 is referred to as a first folding line F1, the overlapping portion 213b of the first edge portion 213 and the second edge portion 223 may be first folded toward the first cup portion 211 along the first folding line F1. Then, when a line spaced apart from the first folding line F1 toward the first cup portion 211 by a second distance L2 and provided in parallel to the first folding line F1 is referred to as a second folding line F2, the overlapping portion 213b of the first edge portion 213 and the second edge portion 223 may be secondly folded toward the first cup portion 211 along the second folding line F2. The secondary battery 200 of FIG. 5 can be implemented by folding twice in this way. Only one folding along the second folding line may also be applied to the secondary battery of this embodiment.

As illustrated in FIG. 8, the secondary battery of this embodiment may also include a first pouch 210 having a first cup portion 211 and a first edge portion 213, and a second pouch 220 having a second cup portion 221 and a second edge portion 223, as in the secondary battery of Embodiment 1. FIG. 8 is a cross-sectional view taken along line B-B of FIG. 5, where the electrode assembly is not illustrated for convenience of explanation. In addition, the second cup portion 221 of this embodiment may also include an overlapping space 222a overlapping the first inner space 212 based on a case of projection in the first direction D1, and an additional space 222b not overlapping the first inner space 212, based on a case of projection in the first direction D1. The first edge portion 213 of this embodiment may also include a non-overlapping portion 213a not overlapping the second edge portion 223 based on a case of projection in the direction D2 opposite to the first direction, and an overlapping portion 213b overlapping the second edge portion 223 (in a state before folding) based on a case of projection in the direction D2 opposite to the first direction.

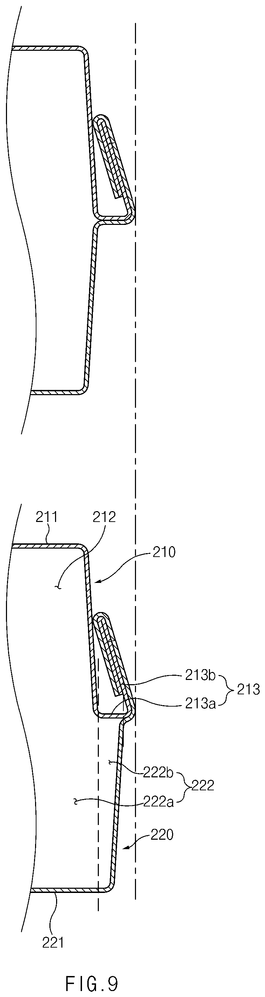

As illustrated in FIG. 9, in the secondary battery (lower drawing) of this embodiment, compared to the conventional secondary battery to which folding is applied (upper drawing), the additional space 222b is provided by utilizing a part of the space occupied by the secondary battery due to the edge portion of the conventional secondary battery, whereby the additional space 222b can be provided while maintaining the conventional volumetric energy density as it is, that is, without a decrease in the volumetric energy density.

Meanwhile, as illustrated in FIG. 8, the overlapping portion 213b of the first edge portion 213 and the second edge portion 223 may be bent toward the first cup portion 211 so as not to be exposed as much as possible to the outside of the non-overlapping portion 213a in the horizontal direction D3 based on a case of projection in the direction D2 opposite to the first direction. Accordingly, the additional space 222b can be secured as much as possible below the non-overlapping portion 213a while preventing a decrease in volumetric energy density as much as possible. However, as illustrated in FIG. 8, in the process of gentle bending, the overlapping portion 213b of the first edge portion 213 and a part of the second edge portion 223 may be exposed to the outside of the non-overlapping portion 213a of the first edge portion 213.

In the secondary battery of this embodiment, the length of the non-overlapping portion 213a along the horizontal direction D3 may be a length allowing the overlapping portion 213b of the first edge portion 213 or the second edge portion 223 to contact the first cup portion 211 by bending. FIG. 8 shows an example in which the second edge portion 223 is in contact with the first cup portion 211. If the length of the non-overlapping portion 213a is long enough not to come into contact with the first cup portion 211 even when the overlapping portion 213b of the first edge portion 213 or the second edge portion 223 is bent as much as possible (e.g., in a horizontally bent state), the volume of the additional space 222b located below the non-overlapping portion 213a becomes excessive when compared to the volume occupied by the electrode assembly inside the secondary battery, thereby resulting in a relatively small capacity of the secondary battery.

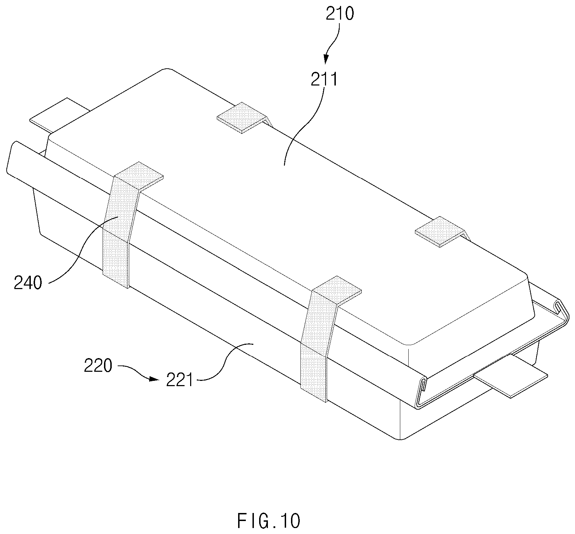

Meanwhile, as shown in FIG. 10, the secondary battery of the present embodiment may further include a fixing tape 240. The fixing tape 240 may be attached to an outer surface of the first cup portion 211 and the second edge portion 223 so as to pull the second edge portion 223 toward the first cup portion 211 so that the overlapping portion 213b of the first edge portion 213 and the second edge portion 223 are not unfolded in a direction away from the first cup portion 211. FIG. 10 is a perspective view illustrating a modified example of the secondary battery of FIG. 5.

The above description is merely an illustrative explanation of the technical idea of the present invention, and various modifications and variations can be made by those skilled in the art to which the present invention pertains without departing from the essential characteristics of the present invention.

Accordingly, the embodiments disclosed in the present invention are not intended to limit but to explain the technical idea of the present invention, and the scope of the technical idea of the present invention is not limited by these embodiments.

The scope of protection of the present invention should be interpreted by the claims below, and all technical ideas within the equivalent scope should be construed as being included in the scope of rights of the present invention.

## Claims

1. A pouch-type secondary battery including:
a first pouch having: a first cup portion recessed in a predetermined first direction to form a first inner space, and a first edge portion extending from the first cup portion in a predetermined horizontal direction perpendicular to the first direction and surrounding at least a portion of the first cup portion; and
a second pouch disposed to face the first pouch, wherein the second pouch has: a second cup portion recessed in a direction opposite to the first direction to form a second inner space for accommodating an electrode assembly together with the first inner space, and a second edge portion extending from the second cup portion in the horizontal direction to surround at least a portion of the second cup portion and coupled to the first edge portion,
wherein the second inner space include:
an overlapping space that overlaps the first inner space based on a case of projection in the first direction, and an additional space that extends from the overlapping space in the horizontal direction and does not overlap the first inner space.

2. The pouch-type secondary battery according to claim 1, wherein the additional space of the second inner space is a space in which the electrode assembly is not disposed.

3. The pouch-type secondary battery according to claim 1, wherein the additional space of the second inner space is provided to accommodate gas generated inside the first and second pouches to delay a start time of discharging the gas to the outside of the first and second pouches.

4. The pouch-type secondary battery according to claim 1, wherein a length of the first edge portion in the horizontal direction is determined based on the size of the first cup portion.

5. The pouch-type secondary battery according to claim 1, wherein the first edge portion includes:
a non-overlapping portion positioned to correspond to the additional space of the second inner space and not overlapping the second edge portion based on a case of projection in a direction opposite to the first direction; and an overlapping portion extending from the non-overlapping portion in the horizontal direction and overlapping the second edge portion.

6. The pouch-type secondary battery according to claim 5, wherein the overlapping portion of the first edge portion and the second edge portion are bent toward the first cup portion.

7. The pouch-type secondary battery according to claim 6, wherein the overlapping portion of the first edge portion and the second edge portion are bent toward the first cup portion so as not to be exposed to the outside of the non-overlapping portion in the horizontal direction based on a case of projection in a direction opposite to the first direction.

8. The pouch-type secondary battery according to claim 6, wherein a length of the non-overlapping portion along the horizontal direction is a length allowing the overlapping portion of the first edge portion or the second edge portion to contact the first cup portion by bending.

9. The pouch-type secondary battery according to claim 6, wherein the overlapping portion of the first edge portion and the second edge portion are first folded toward the first cup portion along a first folding line spaced apart from an outer end of the first edge portion in the horizontal direction toward the first cup portion by a first distance and provided in parallel to the outer end of the first edge portion, and
are secondly folded toward the first cup portion along a second folding line spaced apart from the first folding line toward the first cup portion by a second distance and provided in parallel to the first folding line.

10. The pouch-type secondary battery according to claim 5, further including a fixing tape attached to an outer surface of the first cup portion and the second edge portion so as to pull the second edge portion toward the first cup portion so that the overlapping portion of the first edge portion and the second edge portion are not unfolded in a direction away from the first cup portion.

11. A pouch-type secondary battery including:
a first pouch having: a first cup portion recessed in a predetermined first direction to form a first inner space, and a first edge portion extending from the first cup portion and surrounding at least a portion of the first cup portion; and
a second pouch disposed to face the first pouch, wherein the second pouch has: a second cup portion recessed in a direction opposite to the first direction to form a second inner space for accommodating an electrode assembly together with the first inner space, and a second edge portion extending from the second cup portion to surround at least a portion of the second cup portion and coupled to the first edge portion,
wherein the second inner space is formed in a shape asymmetrical to the first inner space, and include an additional space which is provided due to the asymmetric shape and in which the electrode assembly is not disposed to accommodate gas generated inside the first and second pouches.
